(19) Europäisches Patentamt / European Patent Office / Office européen des brevets

(11) **EP 1 556 631 B1**

(12) **EUROPÄISCHE PATENTSCHRIFT**

(45) Veröffentlichungstag und Bekanntmachung des Hinweises auf die Patenterteilung:
**07.01.2009   Patentblatt 2009/02**

(21) Anmeldenummer: **03775069.2**

(22) Anmeldetag: **21.10.2003**

(51) Int Cl.:
*F16H 37/08* (2006.01)

(86) Internationale Anmeldenummer:
**PCT/DE2003/003492**

(87) Internationale Veröffentlichungsnummer:
**WO 2004/038257 (06.05.2004 Gazette 2004/19)**

(54) **LEISTUNGSVERZWEIGTES GETRIEBE MIT STUFENLOS VERSTELLBARER ÜBERSETZUNG**

POWER-SPLIT TRANSMISSION HAVING AN INFINITELY VARIABLE RATIO

BOITE DE VITESSES A DIVISION DE PUISSANCE ET TRANSMISSION VARIABLE EN CONTINU

(84) Benannte Vertragsstaaten:
**AT BE BG CH CY CZ DE DK EE ES FI FR GB GR HU IE IT LI LU MC NL PT RO SE SI SK TR**

(30) Priorität: **22.10.2002   DE 10249318**

(43) Veröffentlichungstag der Anmeldung:
**27.07.2005   Patentblatt 2005/30**

(73) Patentinhaber: **LuK Lamellen und Kupplungsbau Beteiligungs KG**
**77815 Bühl (DE)**

(72) Erfinder:
- **LAUINGER, Christian**
  **76532 Baden-Baden (DE)**
- **VORNEHM, Martin**
  **77815 Bühl (DE)**
- **TENBERGE, Peter**
  **09123 Chemnitz (DE)**
- **ENGLISCH, Andreas**
  **77815 Bühl (DE)**

(56) Entgegenhaltungen:
| US-A- 4 553 450 | US-A- 4 599 916 |
| US-A- 5 055 094 | US-A- 5 564 998 |
| US-A- 6 045 477 | |

- **BASEDOW G: "Stellgetriebe mit genauerer Einstellmöglichkeit und erhöhter Leistung" ANTRIEBSTECHNIK, KRAUSSKOPF VERLAG FUR WIRTSCHAFT GMBH. MAINZ, DE, Bd. 26, Nr. 6, 1987, Seiten 40-46, XP002144645 ISSN: 0722-8546**

**Beschreibung**

Die Erfindung betrifft ein leistungsverzweigtes Getriebe mit stufenlos verstellbarer Übersetzung.

Getriebe mit stufenlos verstellbarer Übersetzung erfreuen sich in Personenkraftwagen nicht nur wegen des mit ihnen möglichen Fahrkomforts, sondern auch wegen möglicher Verbrauchsminderungen steigender Beliebtheit. Ihr Leistungsvermögen ist im Allgemeinen durch das Drehmomentübertragungsvermögen und den Übersetzungsspreizungsbereich des Variators begrenzt. Der Variator kann in an sich bekannter Weise in Form eines Kegelscheibenumschlingungsgetriebes mit zwei Kegelscheibenpaaren ausgebildet sein, um die ein Umschlingungsmittel, beispielsweise eine Laschenkette, umläuft. Die Übersetzungsverstellung erfolgt durch gegensinnige Veränderung des Abstandes zwischen den Scheiben der Kegelscheibenpaare. Der Variator kann beispielsweise auch in an sich bekannter Weise als Reibradgetriebe ausgebildet sein, bei dem der wirksame Radius, auf dem Räder bzw. Scheiben oder sonstige Wälzkörper aufeinander abrollen, verändert wird.

Bekannt ist z.B. aus der gattungsbildenden US-A-6 045 477, den Spreizungsbereich solcher Getriebe mit kontinuierlich verstellbarer Übersetzung dadurch zu vergrößern, dass mit Leistungsverzweigung gearbeitet wird, wobei in einem leistungsverzweigten Bereich die Drehmomentübertragung sowohl über den Variator als auch über eine parallel zum Variator angeordnete Festübersetzung erfolgt und im nicht verzweigten Bereich die Drehmomentübertragung nur über den Variator erfolgt. Ein Summiergetriebe, das im Allgemeinen an der Abtriebsseite des leistungsverzweigten Getriebes, d. h. hinter dem Variator, angeordnet ist, führt die beiden Zweige auf die Abtriebswelle zusammen. Der Übersetzungsbereich des Variators wird im leistungsverzweigten und nicht-leistungsverzweigten Bereich gegensinnig durchfahren, sodass das Getriebe eine gegenüber dem Variator vergrößerte Spreizung ermöglicht. Das Summlergetriebe kann entweder als einfaches Planetengetriebe oder als ein Planetenkoppelgetriebe, das aus zwei Planetenebenen besteht, ausgeführt sein.

Der Erfindung liegt die Aufgabe zugrunde, ein Getriebe mit stufenlos verstellbarer Übersetzung zu schaffen, das sowohl eine hohe Übersetzungsspreizung als auch ein hohes Drehmomentübertragungsvermögen aufweist

Diese Aufgabe wird mit einem leistungsverzweigten Getriebe mit stufenlos verstellbarer Übersetzung gemäß Anspruch 1 oder 2 gelöst.

Bei dem erfindungsgemäßen Getriebe handelt es sich um ein Dreiwellengetriebe, das ständig in Leistungsverzweigung betrieben wird, wodurch sowohl das Drehmomentübertragungsvermögen als auch die Übersetzungsspreizung vergrößert werden.

Wegen der bereits oben erwähnten ständigen Leistungsverzweigung, und des damit verbundenen ständigen Wälzens des Verteilergetriebes ist es von Vorteil, das Einfachplanetengetriebe oder das Planetenkoppeigetriebe mit negativen Standübersetzungen auszuführen. Dadurch kann die entstehende Wälzleistung, welche den Wirkungsgrad reduziert und demzufolge immer einen erhöhten Kraftstoffverbrauch zur Folge hat, minimiert werden. Insbesondere ausBauraumgründen kann die Standübersetzungen des Einfachplanetengetriebes auf Übersetzungen von -1.5 bis etwa -2.5 eingegrenzt sein.

Zur Realisierung eines Rückwärtsganges ist die Ausgangswelle des Variators über eine Rückwärtsfahrkupplung drehfest mit einem Rückwärtsrad verbunden.

Um komfortmindernde Rucke beim Umschalten zwischen den beiden Leistungsverzweigen zu mindern, sind die Übersetzungen zwischen den einzelnen Rädern des Getriebes vorteilhaft derart gewählt, dass bei der durch Betätigen der ersten und zweiten Kupplung erfolgenden Bereichsumschaltung die Sprünge der dynamischen Leistungen eines ersten und eines zweiten Kegeischeibenpaares des Variators minimal sind.

Mit dem erfindungsgemäßen leistungsverzweigten Getriebe werden komfortablen automatischen Getrieben mit stufenlos veränderbarer Übersetzung neue Einsatzfelder auch für Motoren mit höherem Drehmoment, beispielsweise im Bereich von 500 Nm und darüber erschlossen.

In den Zeichnungen stellen dar:

Fig. 1 ein Blockschaltbild eines Getriebes, wobei das Verteilergetriebe als Einfachplanetengetriebe oder als Koppelplanetengetciebe ausgeführt sein kann,
Fig. 1a ein Blockschaltbild eines Getriebes, wobei das Verteilergetriebe als Einfachplanetengetriebe ausgeführt ist,
Fig. 1b ein erfindungsgemäßes Getriebe mit einem Verteilergetriebe, das aus zwei gekoppelten Planetengetrieben gebildet ist,
Fig. 2 ein vereinfachtes Schema des Getriebes gemäß Fig. 1a,
Fig. 3 das Schaltschema des Getriebes gemäß Fig.1a,
Fig. 4 mögliche Schema von Getrieben mit als Einfachplanetengetriebe ausgeführtem Verteilergetriebe,
Fig. 5 die Gesamtübersetzung in Abhängigkeit von der Variatorübersetzung für die Varianten Nr. 1, 4 und 5 gemäß Fig.4,
Fig. 6 die auf die Motordrehzahl normierten Drehzahlen der Kegelscheibenpaare abhängig von der Gesamtübersetzung für die Variante 1 der Fig.4,

Fig. 7 das auf das Motormoment normierte wirksame Moment am Kegelscheibenpaar 1 in Abhängigkeit von der Gesamtübersetzung für die Variante 1 der Fig.4,

Fig. 8 die Zeitabhängigkeit der Variatorübersetzung (iVar), der Gesamtübersetzung (iGes), der Motordrehzahl (nMot) und der durch die Massenträgheitsmomente bedingten dynamischen Leistungen von Scheibensatz 1 und Scheibensatz 2 (PdynSS1 und PdynSS2) während einer Kickdown-Rückschaltung mit Bereichsumschaltung der Variante 1 gemäß Fig.4,

Fig. 9 ein Blockschaltbild einer Ausführungsform eines erfindungsgemäßen Getriebes, wobei das Verteilergetriebe als Koppelplanetengetriebe ausgeführt ist und

Fig. 10 ein Blockschaltbild einer weiteren abgeänderten Variante des erfindungsgemäßen Getriebes, wobei das Verteilergetriebe ebenfalls als Planetenkoppelgetriebe ausgeführt ist.

Fig. 11 ein Diagramm einer Kettenbelastung in Abhängigkeit verschiedener Parametersätze für ein Getriebe mit Einfachplanetengetriebe nach Variante 4 der Figur 4,

Figur 12 ein Diagramm des Gesamtwirkungsgrads in Abhängigkeit von der Gesamtübersetzung für ein Getriebe mit Einfachplanetengetriebe mit unterschiedlichen Parametersätzen der Variante 4 gemäß Figur 4,

Figur 13 ein Diagramm einer Kettenbelastung in Abhängigkeit verschiedener Parametersätze für ein Getriebe mit Koppelplanetengetriebe gemäß der Figur 10.

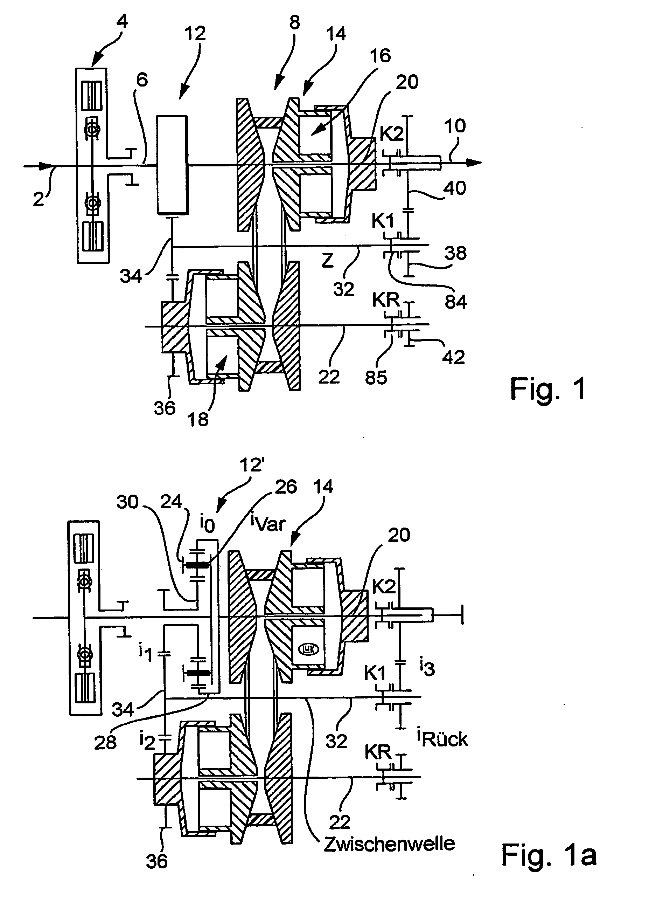

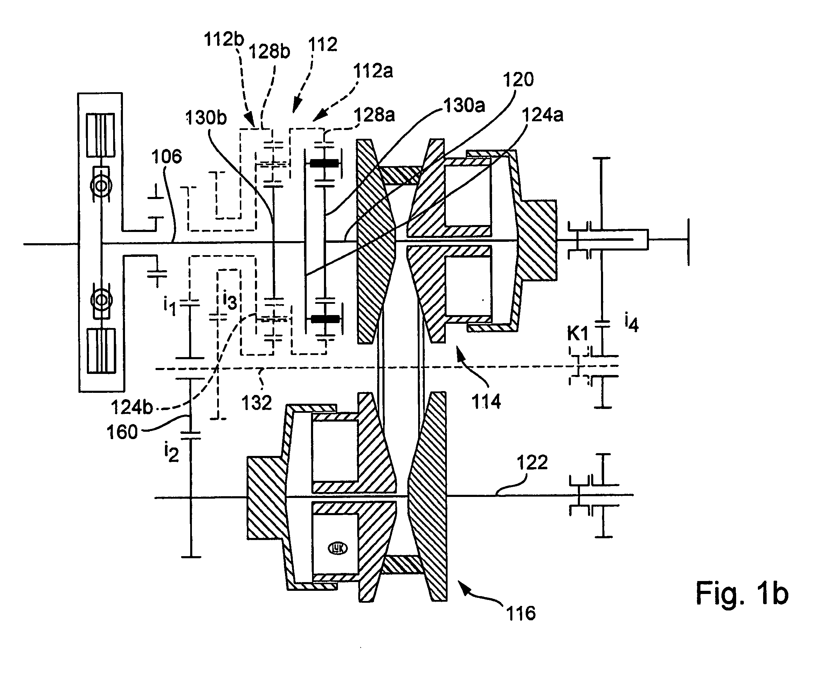

Gemäß Fig. 1 ist eine Kurbelwelle 2 eines nicht dargestellten Verbrennungsmotors über eine Anfahrkupplung 4 mit der Antriebswelle 6 eines insgesamt mit 8 bezeichneten leistungsverzweigten Getriebes verbunden, dessen Abtriebswelle mit 10 bezeichnet ist. Die Pfeile an der Kurbelwelle 2 und der Abtriebswelle 10 bezeichnen die Drehmomentflussrichtung durch das Getriebe, wenn die nicht dargestellte Brennkraftmaschine antreibt.

Das Getriebe 8 enthält ein Koppelgetriebe 12 und einen Variator 14 mit einem ersten Kegelscheibenpaar 16 und einem zweiten Kegelscheibenpaar 18. Der Variator ist in seinem Aufbau an sich bekannt. Das erste Kegelscheibenpaar ist mit einer Eingangswelle 20 des Variators drehfest verbunden. Das zweiten Kegelscheibenpaar 18 ist mit einer Ausgangswelle 22 des Variators drehfest verbunden.

Die Antriebswelle 6 dient als Eingangswelle für das Verteilergetriebe 12, das in den Figuren 1a, 9 und 10 näher dargestellt ist. Ausgangsseitig ist die Zwischenwelle 32 über eine Kupplung K1 drehfest mit einem Kupplungsrad 38 verbunden, das mit einem Abtriebsrad 40 kämmt, das drehfest mit der Abtriebswelle 10 verbunden ist.

Die Eingangswelle 20 ist über eine Kupplung K2 drehfest mit der Abtriebswelle 10 verbindbar.

Die Ausgangswelle 22 des Variators ist über eine Kupplung KR drehfest mit einem Rückwärtsrad 42 verbunden, das für einen Rückwärtsantrieb des Fahrzeugs in an sich bekannter Weise vorgesehen ist. Die durch die einzelnen Elemente des geschilderten Getriebes bewirkten Übersetzungen sind jeweils mit i und einem zugehörigen Index bezeichnet.

Figur 1a zeigt ein Ausführungsbeispiel eines Verteilergetriebes 12 als Einplanetengetriebe 12'. ist. Hierbei ist die Antriebswelle 6 drehfest mit dem Träger 24 des Verteilergetriebes 12 verbunden. Die an dem Träger 24 gelagerten Planetenräder 26 kämmen mit der Innenverzahnung eines Hohlrades 28, das drehfest mit der Eingangswelle 20 verbunden ist.

Die Planetenräder 26 kämmen weiter mit einer ersten Verzahnung eines Sonnenrades 30, das im dargestellten Beispiel das Ausgangsrad des Verteilergetriebes bildet und mit einem drehfest mit einer Zwischenwelle 32 verbundenen Zwischenrad 34 kämmt. Die Zwischenwelle 32 ist funktional parallel zum Variator 14 angeordnet. Das Zwischenrad 34 kämmt mit einem drehfest mit der Ausgangswelle 22 verbundenen Rad 36.

Figur 1b zeigt ein Getriebe mit einem Verteilergetriebe 112, das aus zwei gekoppelten Planetengetrieben 112a und 112b gebildet ist. Dabei sind das Sonnenrad 130b des Planetengetriebes 112b und der Träger 124a des Planetengetriebes 112a mit der Eingangswelle 106 verbunden. Der Träger 124b des Planetengetriebes 112b ist verdrehbar auf der Eingangswelle 106 gelagert und über ein auf der Zwischenwelle 132 gelagertes Losrad 160 mit dem Welle 122 des Scheibensatzes 116 verbunden. Zwischen dem Losrad 130 und der Welle 122 wird die Übersetzung li2 und zwischen dem Träger 124b und dem Losrad 160 die Übersetzung i1 eingestellt. Das Hohlrad 128a des Planetengetriebes 1 12a ist mit dem Träger 124b des Planetengetriebes122b gekoppelt und bildet die Übersetzung i3 aus. Das Hohlrad 128b des Planetengetriebes 112b ist mit der Zwischenwelle 132 und das Sonnenrad 130a des Planetengetriebes 112a ist mit der Welle 120 des ersten Scheibensatzes 114 gekoppelt. Die Welle 120 ist mittels einer Kupplung K1 mit der Zwischenwelle 132 unter Ausbildung einer Übersetzung i4 koppelbar.

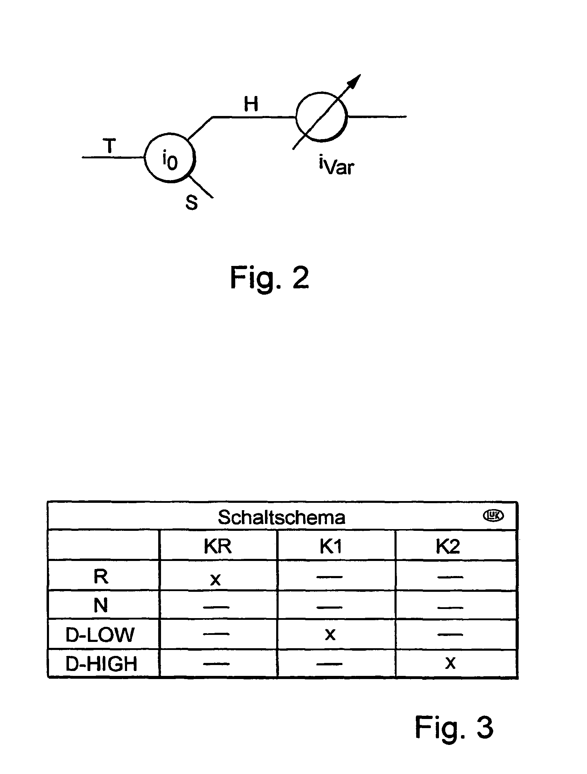

Fig. 2 stellt das Getriebe gemäß Fig. 1a in einem vereinfachten Schaltschema dar, wobei T den Planetenträger, H das Hohlrad und S das Sonnenrad bezeichnet.

Fig. 3 gibt das Schaltschema des Getriebes gemäß Fig. 1 an. Für Rückwärtsfahrt (R) ist die Kupplung KR geschlossen, und die Kupplungen K1 und K2 sind offen.

Im Neutralgang (N) sind alle Kupplungen offen.

Im Bereich hoher Übersetzungen, d. h. niedriger Fahrzeuggeschwindigkeiten (Drive-Low) ist die Kupplung KR offen, die Kupplung K2 offen und die Kupplung K1 geschlossen. Der Abtrieb auf die Abtriebswelle 10 erfolgt somit über die Zwischenwelle 32.

Im Bereich niedriger Übersetzungen bzw. hoher Fahrgeschwindigkeiten (D-High) ist nur die Kupplung K2 geschlossen.

Wie ersichtlich, wird das Getriebe sowohl bei hoher Übersetzung als auch bei niedriger Übersetzung leistungsverzweigt betrieben, d. h. nur ein Teil des gesamten übertragenen Drehmoments wird über den Variator 14 übertragen. Dadurch kann die Belastung des Variators 14 sowie der um die beiden Kegelscheibenpaare 16 und 18 umlaufenden Kette vermindert werden, sodass gegenüber herkömmlichen Getrieben höhere Drehmomente möglich sind.

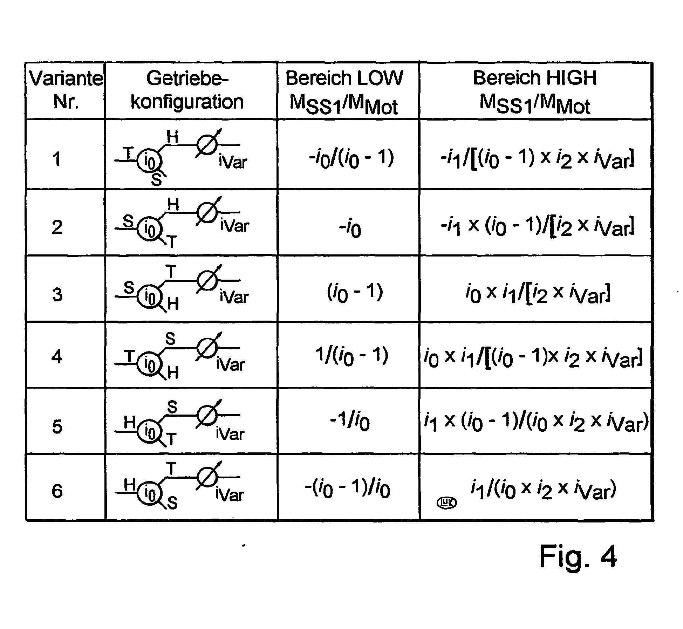

Fig. 4 zeigt anhand der Schemata in der Spalte Getriebekonfiguration, dass je nach Anbindung der Elemente des einfachen Planetengetriebes gemäß Fig. 1 sechs unterschiedliche Varianten möglich sind.

Die dritte Spalte (Bereich Low $M_{SS1}/M_{Mot}$) gibt das Verhältnis des Moments des ersten Scheibenpaars 16 zu der der Antriebswelle 6 an, wenn sich das Getriebe im Low-Bereich befindet. Die vierte Spalte (Bereich High $M_{SS1}/M_{Mot}$) gibt das Verhältnis des Moments des ersten Scheibenpaars 16 bzw. der Eingangswelle 20 des Variators zu der der Antriebswelle 6 an, wenn sich das Getriebe im High-Bereich befindet.

Für die Auslegung des Getriebes bzw. der sechs Getriebekonfigurationen wird die Standübersetzung $i_O$ und das auf das Motormoment normierte Moment am ersten Kegelscheibenpaar 16 im Bereich High, jedoch unmittelbar am Umschaltpunkt zwischen den beiden Bereichen vorgegeben. Wenn zur Vereinfachung die Festübersetzungen $i_1$ und $i_3$ (siehe Fig. 1) zunächst identisch angenommen werden, sind mit diesen Vorgaben alle Übersetzungen festgelegt. Durch die Vorgabe von $i_0$ ist das Verhältnis der Drehzahlen der Eingangswelle 10 und der Antriebswelle 6 im Bereich Low festgelegt. Wenn man sich bauraumbedingt auf negative Standübersetzungen mit Werten zwischen -1,5 bis -2,5 beschränkt, entfallen die Varianten 2, 3 und 6, weil das genannte Momentenverhältnis deutlich größer als 1 ist und dadurch die Gefahr hoher Kettenschädigung besteht.

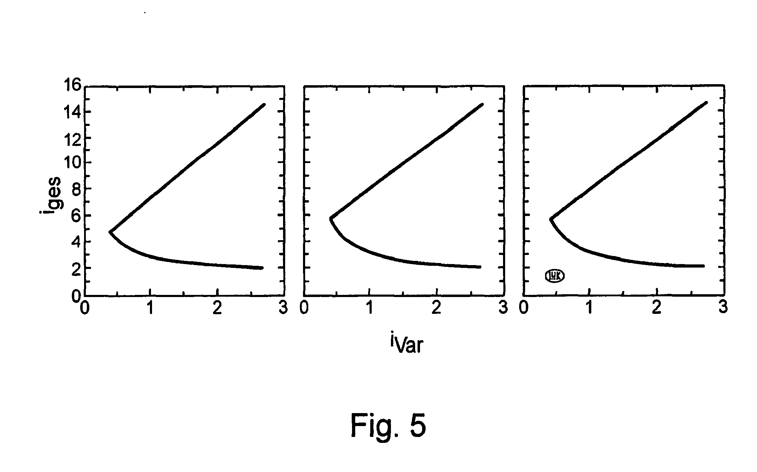

In Fig. 5 ist für die Varianten 1, 4 und 5 die Gesamtübersetzung $i_{ges}$ (Ordinate) abhängig von der Variatorübersetzung (Abszisse) dargestellt. Das linke Diagramm zeigt die Variante 1, das mittlere Diagramm die Variante 4 und das rechte Diagramm die Variante 5. Wie ersichtlich sind die Verläufe für die Varianten 4 und 5 identisch. Der Bereichswechsel erfolgt bei allen Varianten etwa bei $i_{var}$ = 0,4, jedoch bei der Variante 1 bei einer niedrigeren Gesamtübersetzung. Der lineare Teil der Kurven der Fig. 5 ist wegen der Leistungsverzweigung auch in diesem Bereich (Low-Bereich) keine Ursprungsgerade. Durch die Leistungsverzweigung in beiden Fahrbereichen ist es möglich, die Maxima- und Minimalwerte der Drehzahlen der beiden Scheibenpaare bzw. der Eingangswelle 20 und Ausgangswelle 22 des Variators auf ähnliches Niveau zu bringen.

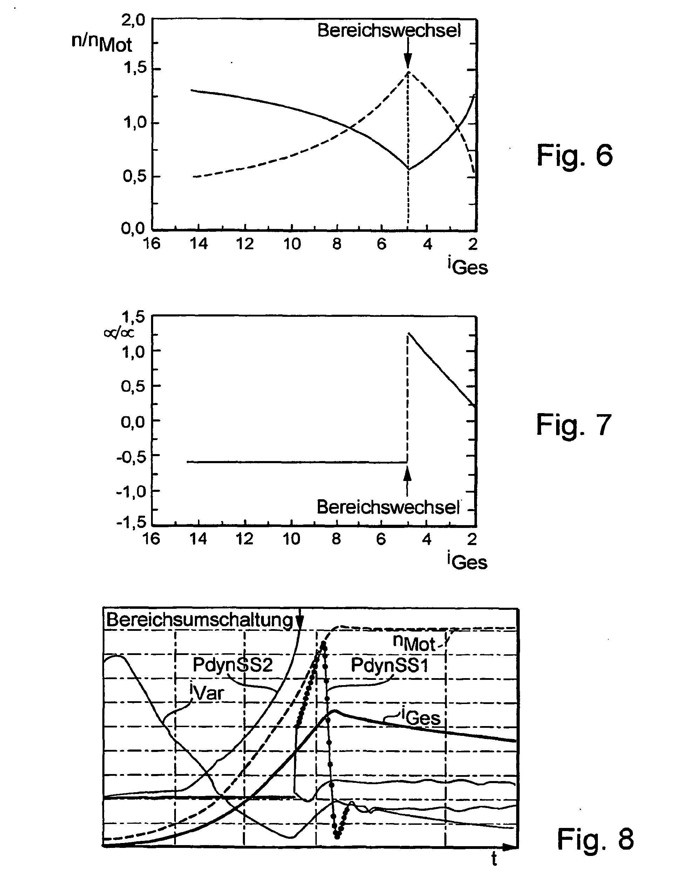

Dies ist in Fig. 6 für die Variante 1 dargestellt wobei die Ordinate jeweils das Verhältnis zwischen der Drehzahl eines Scheibenpaars und der Drehzahl der Antriebswelle 6 angibt und die Abszisse die Gesamtübersetzung $i_{ges}$ angibt. Die durchgehende Kurve gibt die Verhältnisse für das erste Scheibenpaar 16, die gestrichelte Kurve für das Scheibenpaar 18. Die Minimal- und Maximalwerte variieren im dargestellten Beispiel zwischen etwa der halben und etwa dem 1,5-fachen der Motordrehzahl. Das zweite Scheibenpaar 18 kann dadurch, insbesondere am Bereichswechselpunkt, an dem kleinste Variatorübersetzungen erreicht werden, auf ein deutlich geringeres Drehzahlniveau gebracht werden, wodurch die Kettenschädigung aufgrund der verminderten Fliehkräfte und der geringeren dynamischen Effekte deutlich vermindert werden. Dies ist vor allem im Hinblick auf moderne Motoren, die höhere Maximaldrehzahlen haben, wichtig. Ein weiterer Vorteil der geringeren Drehzahlen liegt darin, dass bei einigen der Varianten der Fig. 4 auf eine Fliehölkompensation verzichtet werden kann und somit ein Kostenvorteil erreicht wird.

Fig. 7 zeigt für die Variante 1 das am ersten Scheibenpaar 16 wirksame Moment, bezogen auf das vom Motor her wirkende Moment (Ordinate) abhängig von der Gesamtübersetzung (Abszisse). Wie ersichtlich, ist das durch die Leistungsverzweigung in beiden Fahrbereichen am ersten Scheibenpaar wirksame Moment nur in einem engen Übersetzungsbereich um den Bereichswechselpunkt herum größer als das Motormoment Dadurch ergeben sich zahlreiche weitere Vorteile:

Die Anpresskraft des Umschlingungsmittels kann in dem Maß wie das vom Variator zu übertragende Moment reduziert wird, ebenfalls gesenkt werden. Dadurch sind die Belastungen der Wiegegelenke und die Spannungen in den Laschen der umlaufenden Laschenkette reduziert, wodurch die Kettenlebensdauer erhöht ist.

- Durch das niedrigere Momentenniveau ist eine verminderte Anpressung möglich, wodurch sowohl der unmittelbare Reibkontakt zwischen der Kette und den Kegelflächen vermindert ist, als auch die auf die Verstellscheibe aufzubringenden Anpressdrucke verringert werden. Dies bedingt einen verminderten Energieverbrauch des Variators sowie der Anpresshydraulik und senkt den Kraftstoffverbrauch.

- Hohe Momente an den Kegelscheibenpaaren stellen hohe Anforderungen an die Festigkeit der Wellen. Durch das reduzierte Momentenniveau werden diese Anforderungen vermindert, sodass weitere Spreizungserhöhungen möglich sind.

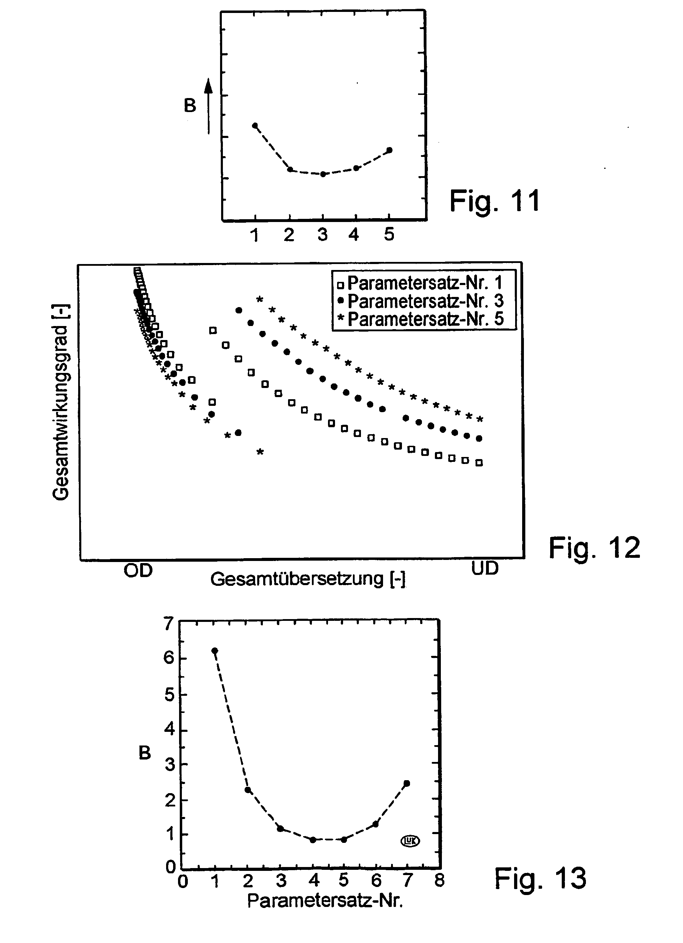

Eine Analyse der sechs in Fig. 5 gezeigten Getriebekonfigurationen haben gezeigt, dass in bezug auf eine gegebenenfalls auftretende Kettenschädigung und einer sich daraus ergebenden Lebensdauer der Kette die Variante Nr. 4 besonders vorteilhaft sein kann. In Fig. 11 ist hierzu beispielhaft die Belastung B der Kette für die Variante 4 bei fester Standübersetzung -1.5 des Verteilergetriebes als Einfachplanetengetriebe 12' (siehe Fig. 1a) für verschiedene Parametersätze 1- 5 der Auslegung gezeigt. Die minimale Kettenschädigung wird mit einer Auslegung gemäß Parametersatz-Nr. 3 erreicht. Diesem entsprechen die folgenden Übersetzungswerte: Standübersetzung io=-1.5, Festübersetzungen i1=i3=-1.414, i2 = -1.871 sowie die Achsübersetzung iAchse = 3.623. Von diesem Parametersatz abweichende Auslegungen für die Übersetzungen führen gemäß Fig. 11 immer zu einer Erhöhung der Kettenbelastung. Dieser Parametersatz ist daher besonders vorteilhaft. Für spezielle Abstimmungen des Getriebes können jedoch auch Parametersätze mit höheren Belastungen vorteilhaft sein, wie sie beispielsweise in den Parametersätzen 2 und 4 dargestellt sind. So sind Auslegungen zu Belastungen zwischen etwa 2.5 und 3.0 möglich, sofern das maximale Motormoment entsprechend angepasst wird.

Die Figur 12 zeigt die für den Parametersatz 3 entsprechende Kurve des Gesamtwirkungsgrads über der Gesamtübersetzung beginnend vom Overdrive OD zum Underdrive UD. Es wird deutlich, dass der Parametersatz Nr. 3 die ausgeglichenste Kurve aufweist und aus dieser Sicht ebenfalls sehr vorteilhaft ist.

Experimentelle und theoretische Untersuchungen haben weitergezeigt, dass für die zeitliche Änderung der Variatorübersetzung, für die die Beziehung

$$\frac{di_{Var}}{dt} = \frac{di_{Var}}{di_{Ges}} \times \frac{di_{Ges}}{dt}$$

gilt, wobei $di_{Ges}/dt$ die Soll-Gesamtgetriebeübersetzung darstellt, mit den in Fig. 4 dargestellten Getriebekonfigurationen gegenüber anderen leistungsverzweigten Getrieben, bei denen das Planetengetriebe bzw. das Planetenkoppelgetriebe beispielsweise hinter dem Variator angeordnet ist, Verbesserungen erzielbar sind.

Ein wichtiger Aspekt bei leistungsverzweigten Getrieben liegt in dem Komfort der Bereichsumschaltung, die im Synchronpunkt (gleiche Gesamtübersetzungen bei geschlossener Kupplung K1 und bei geöffneter Kupplung K2 sowie bei geöffneter Kupplung K1 und geschlossener Kupplung K2) erfolgt. Die Umschaltung der Kupplungen darf möglichst nicht spürbar sein. Ein charakteristisches Merkmal leistungsverzweigter Getriebe ist die Änderung der dynamischen Leistung von im Triebstrang angeordneten Trägheitsmassen am Bereichswechsel, die sich aus den unterschiedlichen Beschleunigungen der Trägheitsmassen in den beiden Fahrbereichen ergeben. Bereits durch eine geschickte Wahl und Auslegung der Gesamtgetriebestruktur (Einzelüber-setzungen i) kann Einfluss auf den Übersetzungsverlauf und damit die Änderung der dynamischen Leistungsanteile am Bereichswechselpunkt genommen werden.

Für die vorliegenden Getriebestrukturen sind die Drehzahlen des ersten Scheibenpaars 16 (SS1) und des zweiten Scheibenpaars 18 (SS2) gegeben durch die Gleichungen:

$$n_{SS1} = n_{Mot} \times i_{Var} \times f(i_{Var})$$

$$n_{SS2} = n_{Mot} \times f(i_{Var}).$$

wobei $n_{Mot}$ die Drehzahl des Motors bzw. die Antriebswelle 6 ist, $i_{var}$ die Variatorübersetzung ist und $f(i_{var})$ eine Funktion der Variatorübersetzung ist.

Eine Besonderheit der vorliegenden Getriebe mit Leistungsverzweigung im Low- und High-Bereich ist die Abhängigkeit der Drehzahl von Scheibensatz 1, $n_{SS1}$, von der Variatorübersetzung $i_{var}$. Die Funktion $f(i_{var})$ hängt von der jeweiligen Variante (Fig. 4) ab. Neben der Variatorübersetzung hängt die Funktion f von den einzelnen Übersetzungen i ab.

Mit den Gleichungen für $n_{SS1}$ und $n_{SS2}$ können die dynamischen Leistungen $P_{dyn,SS1}$ und $P_{dyn,SS2}$ für die Scheibenpaare 16 und 18 berechnet werden, wobei beispielsweise für die Variante 4 der Fig. 4 die Gleichungen

$$P_{dyn,SS1} = \Theta_{SS1} \cdot n_{Mot} \cdot i_{Var}^2 \cdot f(i_{Var})^2 \frac{dn_{Mot}}{dt}$$

$$+ \Theta_{SS1} \cdot n_{Mot}^2 \cdot i_{Var} \cdot f(i_{Var}) \cdot \left[ i_{Var} \cdot \frac{\partial f}{\partial i_{Var}} + f \right] \cdot \frac{\partial i_{Var}}{\partial i_{Ges}} \cdot \frac{di_{Ges}}{dt}$$

$$P_{dyn,SS2} = \Theta_{SS2} \cdot n_{Mot} \cdot f(i_{Var})^2 \frac{dn_{Mot}}{dt}$$

$$+ \Theta_{SS2} \cdot n_{Mot}^2 \cdot f(i_{Var}) \cdot \frac{\partial f}{\partial i_{Var}} \frac{\partial i_{Var}}{\partial i_{Ges}} \cdot \frac{di_{Ges}}{dt}$$

gelten, wobei $\Theta_{SS1}$ und $\Theta_{SS2}$ die Massenträgheitsmomente von Scheibenpaar 16 und Scheibenpaar 18 darstellen. Die unterschiedlichen Übersetzungsveriäufe $i_{var}(i_{Ges})$ im High- und Low-Bereich und die Unstetigkeiten in der Ableitung $di_{var}/di_{Ges}$ am Bereichswechselpunkt sind dafür verantwortlich, dass sowohl $P_{dyn, SS1}$. als auch $P_{dyn, SS2}$ am Bereichswechselpunkt Sprünge aufweisen. Die Sprunghöhe kann unmittelbar mit Hilfe der obigen Formeln angegeben werden. Bis auf $dn_{Mot}/dt$ und $di_{Ges}/dt$ (die fahrzeugspezifisch festgelegt sind) sind alle anderen Größen abhängig vom Getriebeschema und dessen Auslegung. Ziel ist, das Gesamtgetriebe und die Auslegung derart zu wählen, dass die Sprunghöhen am Bereichswechsel punkt minimal sind, wobei dies selbstverständlich mit anderen Zielen, wie der Forderung nach minimaler Kettenschädigung vereinbar sein muss.

Ein weiterer Aspekt ist das Auftreten großer $P_{dyn}$-Werte am ersten Scheibenpaar 16 oder zweiten Scheibenpaar 18 in den unterschiedlichen Fahrbereichen. Ein Vorteil der vorliegenden Getriebestruktur liegt darin, dass die $P_{dyn}$-Unstetigkeit am Bereichswechselpunkt weniger ausgeprägt ist, als in anderen Strukturen. Bei der erfindungsgemäßen Struktur wird beim Bereichswechsel der Beschleunigungsvorgang eines Scheibensatzes zwar beendet oder sogar umgekehrt, allerdings wird gleichzeitig beim Bereichswechsel ein Beschleunigungsvorgang des anderen Scheibensatzes begonnen, bzw. ein Abbremsvorgang in einen Beschleunigungsvorgang umgekehrt. Beide Aktionen zusammen führen zu einem stetigeren Leistungsfluß vom Getriebeeingang zum Getriebeausgang, also zu einem komfortableren Bereichswechsel.

Fig. 8 zeigt die Verhältnisse am Beispiel einer Kickdown-Rückschaltung, die in einem kundenrelevanten Zyklus durchgeführt wird, für ein Getriebe der Variante 4 der Fig. 4. Dargestellt sind die Verläufe von $n_{Mot}$, $i_{var}$, $i_{Ges}$, $P_{dyn, SS1}$ und $P_{dyn, SS2}$, wobei die Zeit von links nach rechts auf der Abszisse läuft. Die Unstetigkeiten in $P_{dyn, SS1}$ und $P_{dyn, SS2}$ bei der Bereichsumschaltung sind deutlich zu erkennen. Durch geeignete Auslegung lassen sich diese Unstetigkeiten vermindern. Außerdem ist ersichtlich, dass die Unstetigkeiten unterschiedliche Richtungen haben, sodass sie sich zum Teil kompensieren.

Eine Analyse zeigt, dass durch geeignete Wahl der Drehmassen, d.h. der MassenTrägheitsmomente die Sprunghöhe derart verändert werden kann, dass die Summe der dynamische Leistung beider Scheibensätze zusammen stetig verläuft. Dadurch ist sogar eine Erhöhung der Kompensation bis hin zu einer vollständigen Kompensation konstruktiv realisierbar. Bei dem hier dargestellten Getriebe ist es vorteilhaft, die Drehmasse des Scheibensatzes 1 etwa doppelt so groß zu machen wie die Drehmasse des Scheibensatzes 2.

Anhand von Fig. 1 können die konstruktiven Möglichkeiten aufgezeigt werden, um diese Bedingung zu realisieren. Vorteilhaft wäre z.B. ein kleines Schwungrad auf der ersten Scheibensatz-Welle 20 vorzusehen. Ebenso vorteilhaft ist es, an der zweiten Scheibensatz-Welle 22 durch eine Hohlwelle oder durch radial klein konstruierte hydraulische Kammern 18 dessen Massen-Trägheitsmoment zu reduzieren. Ebenso vorteilhaft wäre es, die Kupplung K1 nicht in der Nähe der Zahnrades 38 zu plazierten, sondern in der Nähe des Zahnrades 34, d.h. möglichst nahe am zweiten Scheibensatz 22, damit möglichst wenig Drehmasse der Zwischenwelle 32 als dem zweiten Scheibensatz 22 zugehörig betrachtet werden muss. Gleiches gilt für die Kupplung KR.

Das leistungsverzweigte Getriebe mit stufenlos verstellbarer Übersetzung, das mit drei Wellen arbeitet und mit Hilfe eines dem Variator vorgeschalteten Verteilergetriebes in zwei umschaltbaren Vorwärtsbereichen ständig leistungsverzweigt arbeitet, ist nicht auf die anhand der Figuren 1 und 4 geschilderte Verwendung eines Einfachplanetengetriebes als Verteilergetriebe beschränkt.

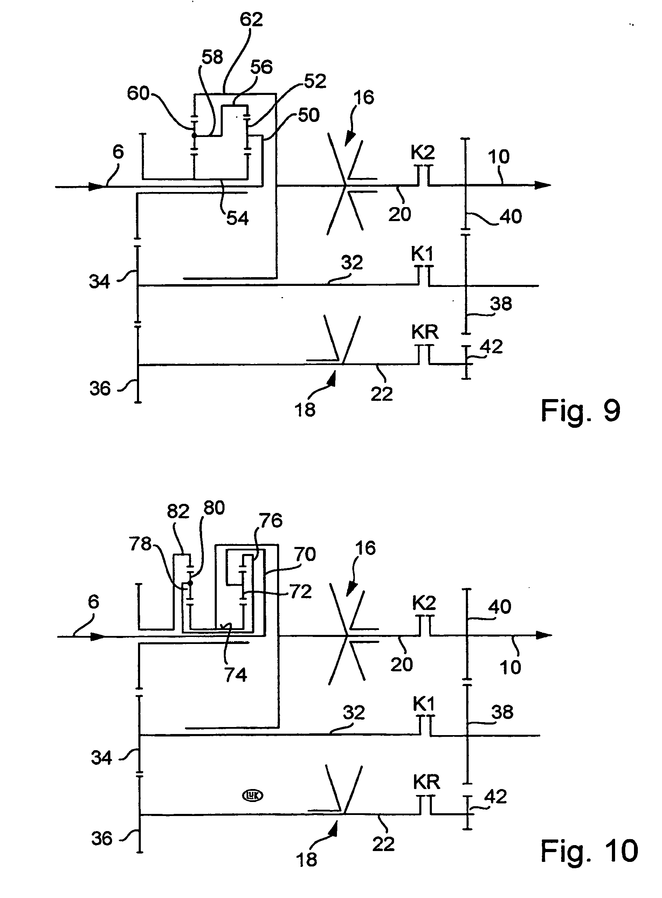

Fig. 9 zeigt in einer gegenüber Fig. 1 vereinfachten Darstellung eine weitere Ausführungsform eines Verteilergetriebes, wobei im Folgenden nur die Abweichungen gegenüber der Ausführungsform gemäß Fig. 1 erläutert werden.

Gemäß Fig. 9 ist die Antriebswelle 6 zunächst ähnlich wie bei der Ausführungsform gemäß Fig. 1 mit dem Planetenträger 50 einer ersten Planetenstufe drehfest verbunden, dessen Planetenräder 52 mit einer ersten Außenverzahnung eines Sonnenrades 54 und der Innenverzahnung eines Hohlrades 56 kämmen, das drehfest bzw. integral mit dem Planetenträger 58 einer weiteren Planetenstufe verbunden ist.

Die Planetenräder 60 des weiteren Planetenträgers 58 kämmen mit einer weiteren Außenverzahnung des Sonnenrades 54 die gleich oder unterschiedlich der ersten Außenverzahnung sein kann und kämmen weiter mit der Innenverzahnung eines Hohlrades 62, das drehfest mit der Eingangswelle 20 verbunden ist. Eine weitere Außenverzahnung des Sonnenrades 54 kämmt mit dem Zwischenrad 34, das, wie in Fig. 1 drehfest mit der Zwischenwelle 32 verbunden ist.

Fig. 10 zeigt eine gegenüber Fig. 9 abgeänderte Ausführungsform eines Verteilergetriebes mit zwei Planetenstufen.

Bei der Ausführungsform gemäß Fig. 10 ist die Antriebswelle 6 drehfest bzw. einteilig mit einem Planetenträger 70 verbunden, dessen Planetenräder 72 mit einer ersten Außenverzahnung eines Sonnenrades 74 und mit der Innenverzahnung eines Hohlrades 76 kämmen, das drehfest bzw. einteilig mit einem weiteren Planetenträger 78 verbunden ist. Die Planetenräder 80 des weiteren Planetenträgers 78 kämmen mit einer weiteren Außenverzahnung des Sonnenrades 74, das drehfest bzw. einteilig mit der Eingangswelle 20 verbunden ist. Die Planetenräder 80 kämmen weiter mit der Innenverzahnung eines Hohlrades 82, das mit einer Außenverzahnung ausgebildet ist, die in Zahneingriff mit dem Zwischenrad 34 ist.

Figur 13 zeigt eine Belastung B der Kette für ein Getriebe unter Verwendung eines Koppelgetriebes 112, wie es in dem in Figur 1b gezeigten Ausführungsbeispiel gezeigt ist. Die Standübersetzungen der beiden Planetengetriebe 112a, 112b wurde dabei auf 2,5 festgelegt, für das Produkt aus den Festübersetzungen i1 und i2 ergibt sich i1*i2=0,849, für das Produkt der Festübersetzungen i3 und i4 ergibt sich i3*i4=2,070. Die Achsübersetzung i(Achse) beträgt 3,775. Daraus ergibt sich eine Variatorspreizung zwischen 2,308 und 0.433. Die daraus resultierende Belastung der Kette ergibt für den Parametersatz 4, dem diese Werte zugrunde liegen, die geringste Belastung. Auch die übrigen Parametersätze können für entsprechende Ausgestaltungsbeispiele vorteilhaft sein.

Es versteht sich, dass die beschriebenen Ausführungsformen nur beispielhaft sind und weitere Varianten von Koppelgetrieben mit einem Variator zur Darstellung eines erfindungsgemäßen Dreiwellengetriebes zusammenfügbar sind.

**Patentansprüche**

**1.** Leistungsverzweigtes Getriebe mit stufenlos verstellbarer Übersetzung, enthaltend

- ein eingangsseitiges Verteilergetriebe (12) mit einem drehfest mit einer Antriebswelle (6) verbundenen Eingangsrad (24; 50; 70),
- einen Variator (14),
- eine Abtriebswelle (10) und
- zwei Kupplungen K1, K2 wobei
- das Eingangsrad des Koppelgetriebes über wenigstens ein Rad des Verteilergetriebes in Dreheingriff mit einer Eingangswelle (20) des Variators ist,
- ein Ausgangsrad (30; 54; 82) des Verteilergetriebes in Dreheingriff mit einer funktionsmäßig parallel zum Variator angeordneten Zwischenwelle (32) ist, die in Dreheingriff mit einer Ausgangswelle des Variators ist,
- die Zwischenwelle (32) über eine erste Kupplung K1 in Dreheingriff mit der Abtriebswelle (10) bringbar ist und
- die Eingangswelle (20) über eine zweite Kupplung K2 in Dreheingrtff mit der Abtriebswelle (10) bringbar ist,

**dadurch gekennzeichnet, daß**
das Verteilergetriebe (12) ein Planetenkoppelgetriebe ist, wobei die Antriebswelle (6) drehfest mit einem Planetenträger (50) verbunden ist, dessen Planetenräder (52) in Dreheingriff mit einem Sonnenrad (54) sind, das in Dreheingriff mit der Zwischenwelle (32) ist, und in Dreheingriff mit einem Hohlrad (56) sind, das drehfest mit einem zweiten Planetenträger (58) verbunden ist, dessen Planetenräder (60) in Dreheingriff mit dem Sonnenrad (54) und mit einem weiteren Hohlrad (62) sind, das drehfest mit der Eingangswelle (20) des Variators verbunden ist.

**2.** Leistungsverzweigtes Getriebe mit stufenlos verstellbarer Übersetzung, enthaltend

- ein eingangsseitiges Verteilergetriebe (12) mit einem drehfest mit einer Antriebswelle (6) verbundenen Eingangsrad (24; 50; 70),
- einen Variator (14),

- eine Abtriebswelle (10) und

- zwei Kupplungen K1, K2 wobei

- das Eingangsrad des Koppelgetriebes über wenigstens ein Rad des Verteilergetriebes in Dreheingriff mit einer Eingangswelle (20) des Variators ist,

- ein Ausgangsrad (30; 54; 82) des Verteilergetriebes in Dreheingriff mit einer funktionsmäßig parallel zum Variator angeordneten Zwischenwelle (32) ist, die in Dreheingriff mit einer Ausgangswelle des Variators ist,

- die Zwischenwelle (32) über eine erste Kupplung K1 in Dreheingriff mit der Abtriebswelle (10) bringbar ist und

- die Eingangswelle (20) über eine zweite Kupplung K2 in Dreheingriff mit der Abtriebswelle (10) bringbar ist,

**dadurch gekennzeichnet, daß**

das Verteilergetriebe (12) ein Planetenkoppelgetriebe ist, wobei die Antriebswelle (6) drehfest mit einem Planetenträger (70) verbunden ist, dessen Planetenräder (72) in Dreheingriff mit einem Sonnenrad (74) und einem Hohlrad (16) sind, wobei das Sonnenrad (74) drehfest mit der Eingangswelle (6) des Variators (14) verbunden ist und das Hohlrad (76) drehfest mit einem weiteren Planetenträger (78) verbunden ist, dessen Planetenräder (80) in Dreheingriff mit dem Sonnenrad (74) und einem weiteren Hohlrad (82) sind, das in Dreheingriff mit der Zwischenwelle (32) ist.

3. Leistungsverzweigtes Getriebe nach einem der Ansprüche 1 bis 2, wobei die Ausgangswelle (22) des Variators (14) über eine Rückwärtsfahrkupplung KR drehfest mit einem Rückwärtsrad (42) koppelbar ist.

4. Leistungsverzweigtes Getriebe nach einem der Ansprüche 1 bis 3, wobei die Übersetzungen zwischen den einzelnen Rädern des Getriebes derart gewählt sind, dass bei der durch Betätigen der ersten und zweiten Kupplung erfolgenden Bereichsumschaltung die Sprünge der dynamischen Leistungen eines ersten und eines zweiten Kegelscheibenpaares des Variators minimal sind.

5. Leistungsverzweigtes Getriebe nach einem der Ansprüche 1 bis 4, **dadurch gekennzeichnet, dass** eine die Leistungsaufnahme bei Übersetzungsveränderung bestimmende Drehmasse derart erhöht wird, dass ein Sprung der gesamten Leistungsaufnahme am Bereichswechselpunkt vernachlässigbar ist.

6. Leistungsverzweigtes Getriebe nach einem der Ansprüche 1 bis 5, **dadurch gekennzeichnet, dass** eine die Leistungsaufnahme bei Übersetzungsveränderung bestimmende Drehmasse derart reduziert wird, dass am Bereichswechseipunkt kein Sprung der gesamten Leistungsaufnahme entsteht.

7. Leistungsverzweigtes Getriebe nach Anspruch 5 oder 6, **dadurch gekennzeichnet, dass** die Reduktion resp. Erhöhung von Drehmassen **dadurch** erreicht wird, dass der Einbauort der Bereichskupplungen derart gewählt wird, dass **dadurch** möglichst viel Drehmasse abgekoppelt resp. zugekoppelt wird.

**Claims**

1. Power-split transmission with a continuously variable transmission ratio, comprising

- an input-side power divider (12) with an input gear (24; 50; 70) which is rotationally fixedly connected to a drive input shaft (6),

- a variator (14),

- a drive output shaft (10) and

- two clutches K1, K2, with

- the input gear of the coupling gearing being in rotational engagement with an input shaft (20) of the variator by means of at least one gear of the power divider,

- an output gear (30; 54; 82) of the power divider being in rotational engagement with an intermediate shaft (32) which is arranged functionally in parallel with the variator and which is in rotational engagement with an output shaft of the variator,

- it being possible for the intermediate shaft (32) to be placed in rotational engagement with the drive output shaft (10) by means of a first clutch K1, and

- it being possible for the input shaft (20) to be placed in rotational engagement with the drive output shaft (10) by means of a second clutch K2,

**characterized in that**

the power divider (12) is a planetary coupling gearing, with the drive input shaft (6) being rotationally fixedly connected to a planet carrier (50) whose planet gears (52) are in rotational engagement with a sun gear (54), which is in rotational engagement with the intermediate shaft (32), and are in rotational engagement with a ring gear (56) which is rotationally fixedly connected to a second planet carrier (58) whose planet gears (60) are in rotational engagement with the sun gear (54) and with a further ring gear (62) which is rotationally fixedly connected to the input shaft (20) of the variator.

**2.** Power-split transmission with a continuously variable transmission ratio, comprising

- an input-side power divider (12) with an input gear (24; 50; 70) which is rotationally fixedly connected to a drive input shaft (6),
- a variator (14),
- a drive output shaft (10) and
- two clutches K1, K2, with
- the input gear of the coupling gearing being in rotational engagement with an input shaft (20) of the variator by means of at least one gear of the power divider,
- an output gear (30; 54; 82) of the power divider being in rotational engagement with an intermediate shaft (32) which is arranged functionally in parallel with the variator and which is in rotational engagement with an output shaft of the variator,
- it being possible for the intermediate shaft (32) to be placed in rotational engagement with the drive output shaft (10) by means of a first clutch K1, and
- it being possible for the input shaft (20) to be placed in rotational engagement with the drive output shaft (10) by means of a second clutch K2,

**characterized in that**
the power divider (12) is a planetary coupling gearing, with the drive input shaft (6) being rotationally fixedly connected to a planet carrier (70) whose planet gears (72) are in rotational engagement with a sun gear (74) and with a ring gear (76), with the sun gear (74) being rotationally fixedly connected to the input shaft (20) of the variator (14) and the ring gear (76) being rotationally fixedly connected to a further planet carrier (78) whose planet gears (80) are in rotational engagement with the sun gear (74) and with a further ring gear (82) which is in rotational engagement with the intermediate shaft (32).

**3.** Power-split transmission according to one of Claims 1 to 2, with it being possible for the output shaft (22) of the variator (14) to be rotationally fixedly coupled to a reverse gear (42) by means of a reverse travel clutch KR.

**4.** Power-split transmission according to one of Claims 1 to 3, with the transmission ratios between the individual gears of the transmission being selected such that, during the range switch which takes place as a result of the actuation of the first and second clutch, the jumps in the dynamic powers of a first and of a second conical disc pair of the variator are minimal.

**5.** Power-split transmission according to one of Claims 1 to 4, **characterized in that** a rotary mass which determines the power consumption in the event of a transmission ratio change is increased such that a jump in the total power consumption at the range change point is negligible.

**6.** Power-split transmission according to one of Claims 1 to 5, **characterized in that** a rotary mass which determines the power consumption in the event of a transmission ratio change is decreased such that no jump in the total power consumption is generated at the range change point.

**7.** Power-split transmission according to Claim 5 or 6, **characterized in that** the reduction or increase of rotary masses is obtained **in that** the installation location of the range clutches is selected such that the greatest possible amount of rotary mass is decoupled or coupled as a result.

**Revendications**

**1.** Boîte de vitesses à division de puissance avec transmission variable en continu, contenant :

- une boîte de vitesses intermédiaire (12) du côté de l'entrée, comprenant une roue d'entrée (24 ; 50 ; 70) connectée de manière solidaire en rotation à un arbre d'entraînement (6),
- un variateur (14),
- un arbre de sortie (10) et
- deux embrayages K1, K2,
- la roue d'entrée de la transmission par engrenage étant en prise rotative avec un arbre d'entrée (20) du variateur par le biais d'au moins une roue de la boîte de vitesses intermédiaire,
- une roue de sortie (30 ; 54 ; 82) de la boîte de vitesses intermédiaire étant en prise rotative avec un arbre intermédiaire (32) disposé fonctionnellement parallèlement au variateur, qui est en prise rotative avec un arbre de sortie du variateur,
- l'arbre intermédiaire (32) pouvant être amené en prise rotative avec l'arbre de sortie (10) par le biais d'un premier embrayage K1 et
- l'arbre d'entrée (20) pouvant être amené en prise rotative avec l'arbre de sortie (10) par le biais d'un deuxième embrayage K2,

**caractérisée en ce que**

- la boîte de vitesses intermédiaire (12) est une transmission par engrenages planétaires, l'arbre d'entraînement (6) étant connecté de manière solidaire en rotation avec un porte-satellites (50), dont les roues planétaires (52) sont en prise rotative avec une roue solaire (54), qui est en prise rotative avec l'arbre intermédiaire (32), et en prise rotative avec une couronne (56) qui est connectée de manière solidaire en rotation à un deuxième porte-satellites (58), dont les roues planétaires (60) sont en prise rotative avec la roue solaire (54) et avec une autre couronne (62) qui est connectée de manière solidaire en rotation à l'arbre d'entrée (20) du variateur.

2. Boîte de vitesses à division de puissance avec transmission variable en continu, contenant :

- une boîte de vitesses intermédiaire (12) du côté de l'entrée, comprenant une roue d'entrée (24 ; 50 ; 70) connectée de manière solidaire en rotation à un arbre d'entraînement (6),
- un variateur (14),
- un arbre de sortie (10) et
- deux embrayages K1, K2,
- la roue d'entrée de la transmission par engrenage étant en prise rotative avec un arbre d'entrée (20) du variateur par le biais d'au moins une roue de la boîte de vitesses intermédiaire,
- une roue de sortie (30 ; 54 ; 82) de la boîte de vitesses intermédiaire étant en prise rotative avec un arbre intermédiaire (32) disposé fonctionnellement parallèlement au variateur, qui est en prise rotative avec un arbre de sortie du variateur,
- l'arbre intermédiaire (32) pouvant être amené en prise rotative avec l'arbre de sortie (10) par le biais d'un premier embrayage K1 et
- l'arbre d'entrée (20) pouvant être amené en prise rotative avec l'arbre de sortie (10) par le biais d'un deuxième embrayage K2,

**caractérisée en ce que**

- la boîte de vitesses intermédiaire (12) est une transmission par engrenages planétaires,
- l'arbre d'entraînement (6) étant connecté de manière solidaire en rotation avec un porte-satellites (70), dont les roues planétaires (72) sont en prise rotative avec une roue solaire (74) et une couronne (76), la roue solaire (74) étant connectée de manière solidaire en rotation à l'arbre d'entrée (20) du variateur (14), et la couronne (76) étant connectée de manière solidaire en rotation à un autre porte-satellites (78), dont les roues planétaires (80) sont en prise rotative avec la roue solaire (74) et avec une autre couronne (82) qui est en prise rotative avec l'arbre intermédiaire (32).

3. Boîte de vitesses à division de puissance selon la revendication 1 ou 2, dans laquelle l'arbre de sortie (22) du variateur (14) peut être accouplé par le biais d'un embrayage de marche arrière KR de manière solidaire en rotation à une roue de marche arrière (42).

4. Boîte de vitesses à division de puissance selon l'une quelconque des revendications 1 à 3, dans laquelle les rapports de transmission entre les roues individuelles de la boîte de vitesses sont choisis de telle sorte que lors des changements de plage produits par l'actionnement du premier et du deuxième embrayage, les sauts de puissances dynamiques d'une première et d'une deuxième paire de disques coniques du variateur soient minimes.

**5.** Boîte de vitesses à division de puissance selon l'une quelconque des revendications 1 à 4, **caractérisée en ce qu'**une masse rotative déterminant la prise de puissance lors d'une modification de rapport de transmission est augmentée de telle sorte qu'un saut de toute la prise de puissance au niveau du point de changement de plage soit négligeable.

**6.** Boîte de vitesses à division de puissance selon l'une quelconque des revendications 1 à 5, **caractérisée en ce qu'**une masse rotative déterminant la prise de puissance lors d'une modification de rapport de transmission est réduite de telle sorte qu'il ne se produise aucun saut de toute la prise de puissance au niveau du point de changement de plage.

**7.** Boîte de vitesses à division de puissance selon la revendication 5 ou 6, **caractérisée en ce que** l'on obtient la réduction ou l'augmentation des masses rotatives **en ce que** le lieu de montage des embrayages à plage est choisi de telle sorte que l'on puisse accoupler ou désaccoupler autant de masses rotatives que possible.

Fig. 1

Fig. 1a

Fig. 1b

T ——( $i_0$ )—— H ——⊘ $i_{Var}$

S

## Fig. 2

| Schaltschema | | | LuK |
|---|---|---|---|
| | KR | K1 | K2 |
| R | x | — | — |
| N | — | — | — |
| D-LOW | — | x | — |
| D-HIGH | — | — | x |

## Fig. 3

| Variante Nr. | Getriebe-konfiguration | Bereich LOW $M_{SS1}/M_{Mot}$ | Bereich HIGH $M_{SS1}/M_{Mot}$ |
|---|---|---|---|
| 1 | | $-i_0/(i_0 - 1)$ | $-i_1/[(i_0 - 1) \times i_2 \times i_{Var}]$ |
| 2 | | $-i_0$ | $-i_1 \times (i_0 - 1)/[i_2 \times i_{Var}]$ |
| 3 | | $(i_0 - 1)$ | $i_0 \times i_1/[i_2 \times i_{Var}]$ |
| 4 | | $1/(i_0 - 1)$ | $i_0 \times i_1/[(i_0 - 1) \times i_2 \times i_{Var}]$ |
| 5 | | $-1/i_0$ | $i_1 \times (i_0 - 1)/(i_0 \times i_2 \times i_{Var})$ |
| 6 | | $-(i_0 - 1)/i_0$ | $i_1/(i_0 \times i_2 \times i_{Var})$ |

Fig. 4

Fig. 5

Fig. 6

Fig. 7

Fig. 8

Fig. 9

Fig. 10

B ↑

Fig. 11

1    2    3    4    5

Gesamtwirkungsgrad [-]

□ Parametersatz-Nr. 1
● Parametersatz-Nr. 3
* Parametersatz-Nr. 5

OD                    Gesamtübersetzung [-]                    UD

Fig. 12

B

Fig. 13

0    1    2    3    4    5    6    7    8
Parametersatz-Nr.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6045477 A